# EUROPEAN PATENT APPLICATION

(11) **EP 1 357 734 A1**
(43) Date of publication of application: **29.10.2003**
(21) Application number: 01995044.3
(22) Date of filing: 28.12.2001
(51) Int. Cl.: H04N 1/00, H04N 7/173, G06F 17/60, G06F 17/30, G06F 13/00

(54) **CONTENTS DIRECTORY SERVICE SYSTEM**

(30) Priority: 29.12.2000 JP 2000404940
(71) Applicant: Foursis Business Promotion Kabushiki Kaisha, Tokyo 101-0045 (JP)
(72) Inventor: NAKANISHI, N., c/o Foursis Business Promotion K.K., Tokyo 101-0045 (JP); TOYOTA, Yuichi, c/o Kabushiki Kaisha CCP, Cyuo-ku, Tokyo 104-0031 (JP)
(74) Representative: Klunker . Schmitt-Nilson . Hirsch
(86) International application number: JP0111662
(87) International publication number: WO02056580

(57) **Abstract**

Retrieving content from distributed content servers and using the content to perform charging and register the content in a content server.
There is provided a directory service system for content including: a user terminal serving as a client; a computer network to which a user makes connection from the user terminal; a content server master set to be accessed via the computer network; and a content server slave set, which is characterized in that attribute information to be used as a key when content is retrieved and extracted or selected is included in content to be stored in the content server master set and the content server slave set, and information indicating a location of the content server slave set to be connected to the computer network and authority for accessing the content stored in the content server slave set are set in the content server master set, and the directory service system for content performs: processing in which, in response to a request for a desired content from the user terminal, the content server master set receives the request; processing for retrieving and extracting content corresponding to a desired condition of the requested content from the content server master set and the content server slave set; and processing for sending an extracted result to the user terminal.

## Description

### Technical Field

The present invention relates to a directory service system for content including distributed servers consisting of a content server master set and a content server slave set, which, when a user retrieves and uses content such as an image file through a computer network such as the Internet, retrieves and extracts the content server master set and the content server slave set in response to a request for desired content from a user terminal.

### Background Art

In recent years, following development of a computer network and a communication environment, businesses such as commercial activities represented by the Internet have been actively carried out. There are a large number of Web sites for a shopping mall, an auction, and the like as well, and various techniques such as a settlement method which attend them have been developed.

In addition, a personal digital assistant, a cellular phone, and a PHS as well as information consumer electronics such as an Internet TV and a game device have widely spread other than information equipment such as a personal computer. Some cellular phones equipped with a browser function have been placed on the market, and it has also become possible to browse a Web page on the Internet from a cellular phone terminal.

Under such circumstances, it has been becoming possible for a user to access various contents through a computer network to perform browsing, output such as printing, acquisition by means of download, and the like of the contents, and needs for a technique relating to a price for acquisition of content online and copyright therefor (or royalty for copyright) have been increasing rapidly.

Under such circumstances, a system for allowing a user to distribute and browse various contents such as distribution of music through an electronic network has been developed.

In addition, following the development of the system, means for charging, a compression technique of information for performing distribution or the like, an encryption technique for protection of copyright, privacy information, and the like, a user interface for allowing the user to use the system with a simple operation, and the like have been developed.

Under such circumstances, it is expected that electronic commerce, exchange and provision of information on goods and services, and exchange and provision of information among companies, public institutions, researches, academic, and cultural institutions, and the like through an electronic network will be carried out more actively.

Above all, a computer network represented by the Internet is connected across borders and can be accessed by anybody having a terminal. It is an advantage of the computer network to easily perform registration and distribution of various kinds of information.

On the other hand, on the Internet, various files such as an image file, a moving image file, and a character information file such as a text can be handled. Moreover, various techniques for retrieving these files have been developed.

For example, in JP-A-10-286599 "Meta-retrieval method, image retrieval method, meta-retrieval engine, and image retrieval engine", there is disclosed a retrieval method with a computer which inputs a question term for retrieval in retrieving an image or the like and retrieves to display an image matching the question.

In addition, in JP-A-11-113779 "Image classification method, image inquiry method, image classification apparatus, and image inquiry apparatus", there are disclosed a method and an apparatus which define a shape such as a circle, a square, a triangle, or a segment to be a base included in an image and classify images based upon presence or absence of the base shape.

Alternatively, in JP-A-11-316846 "Image collation method and image collation apparatus using area information and edge information of image", there are disclosed a method and an apparatus for image database collation on the basis of combination of derivation of an image similarity based upon area information and derivation of an image similarity based upon edge information. In addition, there is disclosed a technique for calculating a similarity among candidate images, grouping the candidate images based upon a result of the calculation, and re-sequencing to display the candidate images.

Other than the above, various retrieval techniques for images existing in a database or on a Web have been developed so far.

Incidentally, if a system can be adopted which can manage contents stored in content servers distributed to exist on a network unitarily to make it possible to retrieve the contents, a location of every content can be grasped and managed and, moreover, a directory service system for content using this system can be established. This is convenient for both users and providers of the contents.

However, if the directory service system for content using the distributed content servers as described above is simply established and provided, another new problem arises.

That is, when retrieval can be performed using the above-mentioned retrieval technique, since anybody can easily access content, other measures must be provided concerning protection of content, protection of copyright, and the like.

In addition, appropriate charging processing cannot be performed unless charging for use of content is performed appropriately, and the content can be used if the charging processing is performed and the content cannot be used if the charging processing is not performed. Therefore, it becomes difficult to store the content by, for example, registering it in a server.

As a prior art for solving such a problem, for example, in JP-A-11-224257 "Encapsulation object configuration method, encapsulation object retrieval execution method and system, and storage medium having stored therein encapsulation object retrieval execution program", there is disclosed a technique for starting up a retrieval application, inquiring a searcher holding a right to use for using the retrieval application about the right to use of the retrieval application, acquiring the right to use from the searcher, starting up a retrieval method with the acquired right to use as an argument, generating retrieval options in the retrieval method in multiple stages and, at the same time, generating index information in multiple stages with the retrieval method to develop a capsule, and using the retrieval options developed in the capsule to perform retrieval targeting the generated index information with the retrieval application.

According to this invention, an encapsulation object configuration method is adopted which applies retrieval, with an accuracy which is different depending upon a searcher, to an encapsulation object for which direct reference is made impossible by encapsulating a multimedia object, which is characterized by providing, in one capsule, a multimedia object consisting of multimedia content and disclosed index information, plural methods for a capsule operation including at least one retrieval method for performing retrieval, and an interface for starting up the retrieval method. Consequently, effects as described below are generated.

That is, in the case in which, for example, digital content is retrieved, since the index information is added to the content, it becomes possible to develop the encapsulated content with an accuracy, which is different depending upon a retrieval level, and retrieve the content efficiently.

However, although the method of retrieving content through a network using the index information is disclosed here, there is no disclosure about a technique for performing charging processing at a point when, for example, a user has downloaded or outputted content and, what is more, performing charging processing according to a size, a resolution, an output method, and the like of the content at the time of charging, and performing protection of content in the case in which charging processing is not performed (i.e., in the case in which download, output, or the like is not performed).

In addition, in JP-A-11-149707 "Digital content distribution system", there is disclosed a technique in which, when a software user who manages a data recording device sends a request to a content distribution center which converts content software such as a video into digital data compressed in time base and stores the digital data, the content distribution center distributes a collation code, which collates the digital data compressed in time base of the content software according to the request and an identification code, through information transmission means, the data recording device records the digital data when the received collation code is collated with an identification code of its own and, at the same time, a development device develops the digital data compressed and recorded in the data recording device to output the digital data to an output device.

According to this invention, content software with a large amount of information such as a video, an image, music, or the like desired by a user can be provided to the user inexpensively without intervention of media.

However, although the compression and development method of content with a large amount of information is disclosed here, there is no disclosure about a technique for performing charging processing at the point when a user has downloaded or outputted content and, what is more, performing charging processing according to a size, a resolution, an output method, and the like of the content at the time of charging, and performing protection of content in the case in which charging processing is not performed (i.e., in the case in which download, output, or the like is not performed).

Alternatively, in JP-A-10-269289 "Digital content distribution management method, digital content reproduction method and apparatus", there is disclosed a technique for integrating a public encryption/decryption circuit for decrypting an encrypted content key and encrypting a session key, a common key storage memory for storing the content key and the session key, a communication key storage memory for storing key information of a public encryption system, a point information storage memory for storing point information, a point use information storage memory for storing point use information, a common encryption/decryption circuit for performing decryption of encrypted digital content, decryption of encrypted point information, and encryption of point use information, an expansion circuit for expanding compressed digital content, and a D/A conversion circuit for D/A converting digital content into one chip.

According to this invention, a system is established which can be carried easily and makes it possible to enjoy digital content anytime and anywhere, sufficiently withstands operation as a protection against copying or illegal use of digital content, and is economical.

However, again, there is no disclosure here about a technique for performing charging processing at the point when a user has downloaded or outputted content and, what is more, performing charging processing according to a size, a resolution, an output method, and the like of the content at the time of charging, and performing protection of content in the case in which charging processing is not performed (i.e., in the case in which download, output, or the like is not performed).

Alternatively, in JP-A-8-54950 "Software used amount measurement device and multimedia information output device", there is disclosed a software used amount measurement device which can determine a used amount for performing appropriate charging even in the case in which software is used in a form of use other than a usual form of use.

According to this invention, when encrypted image data frames compressed according to the MPEG standard are sent to an SD circuit, a DES decryption section decrypts the frames on condition that a charging counter value is one or more. The decrypted image data frames are expanded in an MPEG expansion circuit one by one. Every time one frame is expanded, the MPEG expansion circuit outputs a frame expansion completion signal to a frame counter section. The frame counter section counts this frame expansion completion signal and outputs a counter value to a unit conversion section. Every time the counter value reaches a predetermined reference value, the unit conversion section instructs a charging counter register section to decrement a charging count value.

However, although the charging processing in decrypting encrypted data in the MPEG standard is disclosed here, there is no disclosure about a technique for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

Alternatively, in JP-A-6-141004 "Charging system", there is disclosed a technique for realizing a so-called "pay-per-program" with which a user views individual programs with charges without entering into a comprehensive agreement.

According to this invention, a charging center sends a viewing permission code for viewing a pay program to a data communication device in response to an application for pay program view carried out via a public telephone and telegram line from an applicant for pay program viewing and, at the same time, collects charges and, in a receiving device which has received the viewing permission code, a user views a pay program in accordance with the viewing permission code. One of three forms of fixed, selection, and change is adopted for a way of scrambling a broadcast program, one of three forms of time designation, program number designation, and preliminary number designation is adopted for application for viewing, and one of three forms of decode data, nonpublic program number, and decode data number is adopted as the viewing permission code.

However, although the charging processing in program viewing is disclosed here, there is no disclosure about a technique for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

In addition, as a technique related to acquisition of an authentication key, for example, in JP-A-2000-90039 "Music distribution method, transmission apparatus and method, as well as reproduction apparatus and method", there is disclosed a technique for sufficiently taking into account protection of copyright of distributed music data in a music data distribution system.

According to this invention, a terminal device, identification information, charging processing, and digital audio data are provided, and a music server and a client are connected to the Internet. In the client, a public key and a secret key are created based upon. an ID peculiar to a reproduction apparatus. The public key is sent to the server and registered and the secret key is held in the apparatus. Distribution of music data is requested to the server from the client. Encryption is applied to the music data extracted from a music DB with the registered public key.

The encrypted music data is sent to the client and saved in the reproduction apparatus. At the time of reproduction, the music data is reproduced while being decoded with the secret key held in the apparatus. The music data saved in the apparatus cannot be reproduced by other reproduction apparatuses because the music data is encrypted with the key which is created based upon the ID peculiar to the apparatus.

However, although the technique for distribution of music data, charging processing, and copyright protection is disclosed here, since charging processing which uses an ID peculiar to a reproduction apparatus is performed, music data cannot be reproduced by other reproduction apparatuses.

In addition, in JP-A-8-55021 "Key authentication system", there is disclosed a technique for realizing improvement of security related to sales of software and, at the same time, reducing a temporal burden on a user without complicating a storage medium for the software.

According to this invention, a module which can be incorporated in or detachably attached to hardware is provided to encryption software obtained from a software storage medium or by communication and a function for generating unique information peculiar to a user is provided in this module and, at the same time, a function for generating permission information based upon the information peculiar to the user is given to a center managing the software, whereby it is judged whether or not a user is a proper user who should be permitted to use the software based upon the information generated in the module and the permission information generated in the center.

In this way, although the technique for judging whether or not a user is a proper user who should be permitted to use software is disclosed, there is no disclosure about a technique for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

Moreover, as a technique related to charging processing at the time of printing, for example, in JP-A-11-119937 "Network printer", there is disclosed a technique for making it possible to correctly perform charging management in a network printer applicable to multi-protocol.

According to this invention, a network printer is provided with: a network adapterhaving a communication protocol section for receiving communication print data of multi-protocol including charging information and print object data; a communication application section for adding a print processing instruction to the communication print data to output the data, and charging management protocol selection means for outputting only communication print data in a communication protocol and a communication application selected by a user when charging management is performed; a controller for receiving the communication print data outputted from the network adaptor to output the data; a print section for printing print object data; and a charging management section for acquiring charging information from the print section. Consequently, charging management can be performed correctly.

In this way, although a network printer which can perform charging management is realized by using communication print data of multi-protocol including charging information and print object data, there is no disclosure about a technique for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

Thus, in order to solve the above-mentioned problems, it is an object of the present invention to provide a content charging system for performing charging processing at the point when a user has, for example, downloaded or outputted content and, what is more, performing charging processing according to a size, a resolution, an output method, and the like of the content at the time of charging, and performing protection of the content in the case in which charging processing is not performed (i.e., in the case in which download, output, or the like is not performed).

In addition, it is another object of the present invention to provide a content charging system which is efficient for performing charging processing according to a size, a resolution, an output method, and the like of content and with which a user is capable of designating the size, the resolution, the output method, and the like at the point when the charging processing is performed.

Moreover, it is another object of the present invention to provide a content charging system using a computer readable information storage medium having stored therein content data provided with a data structure of content for the above purpose, and the content data.

### Disclosure of the Invention

In order to solve the above-mentioned problems, according to a first aspect of the present invention, there is provided a directory service system for content including:
a user terminal serving as a client;
a computer network to which a user makes connection from the user terminal;
a content server master set to be accessed via the computer network; and
a content server slave set,
which is characterized in that attribute information to be used as a key when content is retrieved and extracted or selected is included in content to be stored in the content server master set and the content server slave set,
information indicating a location of the content server slave set to be connected to the computer network and authority for accessing the content stored in the content server slave set are set in the content server master set, and
charging information concerning a price for using the content is included in the attribute information included in the content to be stored in the content server master set and the content server slave set, whereby the directory service system for content performs:
   processing in which, in response to a request for a desired content from the user terminal, the content server master set receives the request;
   processing for retrieving and extracting content corresponding to a desired condition of the requested content from the content server master set and the content server slave set; and
   processing for sending an extracted result to the user terminal, and is capable of performing charging processing based upon the attribute information.

In addition, in order to solve the above-mentioned problems, according to a second aspect of the present invention, there is provided a directory service system for content according to the first aspect of the present invention, which is characterized in that one or plural pieces of information among information such as keywords indicating details of the content, categories for classifying details of the content, and types of content files are further included in the attribute information included in the content to be stored in the content server master set and the content server slave set.

In addition, in order to solve the above-mentioned problems, according to a third aspect of the present invention, there is provided a directory service system for content according to the first or second aspect of the present invention, which is characterized in that the content stored in the server master set or the server slave set is content which can be retrieved, with the attribute information as a key, by designating one or plural pieces of information among information such as the price for use of content, the keyword indicating details of the content, the categories for classifying details of the content, and the types of content files.

In addition, in order to solve the above-mentioned problems, according to a fourth aspect of the present invention, there is provided a directory service system for content according to the third aspect of the present invention, which is characterized in that, in the attribute information included in the content stored in the server master set or the server slave set, only content, which can be used designating one or plural pieces of information among information such as limitation on a price for use of content and a method of use, and limitation on a user, is retrieved.

In addition, in order to solve the above-mentioned problems, according to a fifth aspect of the present invention, there is provided a directory service system for content according to any one of the first to fourth aspects of the present invention, which is characterized in that the server slave set includes a slave set server installed by an administrator different from an administrator of the server master set and is a distributed system.

In addition, in order to solve the above-mentioned problems, according to a sixth aspect of the present invention, there is provided a directory service system for content according to any one of the first to fifth aspects of the present invention, which is characterized in that the system is further provided with a commerce server for performing charging management in cooperation with the content server master set and performs charging processing as the user performs use such as output of the extracted and selected content.

In addition, in order to solve the above-mentioned problems, according to a seventh aspect of the present invention, there is provided a directory service system for content according to the sixth aspect of the present invention, which is characterized in that, in performing charging processing by performing output of the extracted and selected content, the content is decoded in the user terminal.

In addition, in order to solve the above-mentioned problems, according to an eighth aspect of the present invention, there is provided a directory service system for content according to the sixth or seventh aspect of the present invention, which is characterized in that the content is content which is encoded according to its own format decodable by using a decode key.

In addition, in order to solve the above-mentioned problems, according to a ninth aspect of the present invention, there is provided a directory service system for content according to the seventh or eighth aspect of the present invention, which is characterized in that the content is decoded and charged designating one or plural conditions for use among conditions such as a method of outputting and using the content, and a size, a resolution, and the number of outputs of content to be outputted.

In addition, in order to solve the above-mentioned problems, according to a tenth aspect of the present invention, there is provided a directory service system for content according to any one of the first to ninth aspects of the present invention, which is characterized in that sample data of the content, data of a content main body, charging information concerning a price for use of the content, attribute information concerning control of use of the content, and a unique ID for identifying the content are included in the content.

In addition, in order to solve the above-mentioned problems, according to an eleventh aspect of the present invention, there is provided a directory service system for content according to any one of the first to ninth aspects of the present invention, which is characterized in that sample data of the content, information on a URL where the content main body is located, charging information concerning a price for use of the content, attribute information concerning control for use of content, and a unique ID for identifying the content are included in the content.

In addition, in order to solve the above-mentioned problems, according to a twelfth aspect of the present invention, there is provided a directory service system for content according to any one of the first to ninth aspects of the present invention, which is characterized in that sample data of the content, a content location ID for identifying a location on a network of the content main body, charging information concerning a price for use of the content, attribute information concerning control for use of content, and a unique ID for identifying the content are included in the content.

In addition, in order to solve the above-mentioned problems, according to a thirteenth aspect of the present invention, there is provided a directory service system for content according to any one of the first to twelfth aspects of the present invention, which is characterized in that the processing for performing charging processing by performing output of extracted and selected content is to perform processing for selecting content through processing for, for example, browsing the sample data of the content stored in the content server.

In addition, in order to solve the above-mentioned problems, according to a fourteenth aspect of the present invention, there is provided a directory service system for content according to any one of the first to thirteenth aspects of the present invention, which is characterized in that, in the processing for performing authentication of a user when charging processing is performed as a user outputs and uses extracted and selected content, the authentication is performed using a hardware key provided in a user terminal.

In addition, in order to solve the above-mentioned problems, according to a fifteenth aspect of the present invention, there is provided a directory service system for content according to the fourteenth aspect of the present invention, which is characterized in that the system is further provided with a content output shop terminal, which is provided by the system administrator side, being connected to a computer network, and is capable of outputting and using content as a user provides an authentication key in the content output shop terminal.

In addition, in order to solve the above-mentioned problems, according to a sixteenth aspect of the present invention, there is provided a directory service system for content according to any one of the first to fifteenth aspects of the present invention, which is characterized in that the directory service system is a system for registering content consisting of computer readable data using a computer system provided with input means, storage means, control means, display means, and output means, and it is possible to register content according to processing including:
a step of designating attribute information to be used as a key when the content is retrieved and extracted or selected;
a step of packaging data of the content based upon the designated information;
a step of designating a storage place of the content; and
a step of storing the packaged data in an information storage medium.

In addition, in order to solve the above-mentioned problems, according to a seventeenth aspect of the present invention, there is provided a directory service system for content according to the sixteenth aspect of the present invention, which is characterized in that information on whether or not content may be disclosed is included in attribute information of content to be registered.

In addition, in order to solve the above-mentioned problems, according to an eighteenth aspect of the present invention, there is provided a directory service system for content according to the sixteenth or seventeenth aspect of the present invention, which is characterized in that the content to be registered is content which a user registers from a user terminal connected to a network, and the directory service system includes processing for setting a hardware key for authentication with respect to the user in the user terminal when the user registers the content.

Further, in order to solve the above-mentioned problems, according to a nineteenth aspect of the present invention, there is provided a directory service system for content according to any one of the first to eighteenth aspects of the present invention, which is characterized in that the content is a file such as an HTML file, an XML file, or a CHTML file to be displayed on a computer network, in which sample data for the content, information on a URL where a content main body is located or a content location ID for identifying a location of the content on a network, charging information concerning price information of the content, attribute information concerning control for use of the content, and a unique ID for identifying the content are included.

### Brief Description of the Drawings

Fig. 1 is a system diagram showing a basic system configuration of the present invention.
Fig. 2 is a block diagram showing a basic configuration and function of a system in accordance with the present invention.
Fig. 3 is a diagram schematically showing processing for designating attribute information such as a content ID, a server ID, a type or category of content, or a keyword in registering content.
Fig. 4 is a diagram schematically showing a system in performing retrieval processing using such distributed servers.
Fig. 5 is a diagram showing screen images at the time of registration of content.
Fig. 6 is a screen image diagram showing an example of a screen image of a user terminal at the time when retrieval processing is performed.
Fig. 7 is a screen image diagram showing an example of a screen image of a user terminal at the time when retrieval processing is performed.
Fig. 8 is a flowchart showing basic processing for performing registration processing and retrieval processing of content using the system of the present invention.
Fig. 9 is a flowchart showing a flow of basic processing at the time when registration processing of content is performed.
Fig. 10 is a flowchart showing a flow of basic processing at the time when content retrieval processing is performed.
Fig. 11 is a data structure diagram showing an example of a data structure of content including sample data of the content, data of the content, charging information concerning price information of the content, a unique ID for identifying the content.
Fig. 12 is a data structure diagram showing an example of a data structure of content including sample data of the content, information on a URL where the content is located, charging information concerning price information of the content, and a unique ID for identifying the content.
Fig. 13 is a data structure diagram showing an example of a data structure of content including sample data of the content, a content location ID for identifying a location on a network of the content, charging information concerning price information of the content, and a unique ID for identifying the content.
Fig. 14 is a diagram showing information to be set in an IC chip of a USB in the case in which a USB key is used as an example of an authentication key.
Fig. 15 is a flowchart showing a flow of basic processing in the case in which charging at output time is performed according to processing for performing decode of content based upon the use request information to output the content.
Fig. 16 is a flowchart showing a flow of basic processing in the case in which registration of content is performed using an authentication key.
Fig. 17 is a flowchart showing a flow of basic processing in the case in which registration of content is performed using an authentication key.
Fig. 18 is a flowchart showing a detailed flow of authentication processing.
Fig. 19 is a flowchart showing a detailed flow of charging processing.
Fig. 20 is a block diagram showing an example of data for, in a user terminal to which image content has been downloaded, detecting and interpreting attribute information included in content and performing output in accordance with attribute information concerning control of use of the content.

### Best Mode for Carrying Out the Invention

Embodiments of the present invention will be hereinafter described with reference to the accompanying drawings.

First, a data structure of content (image, moving image, software, etc.) used in a directory service system for content of the present invention will be described.

The content is content such as an image consisting of computer readable data and is stored in an information storage medium such as a storage apparatus for storing content such as a database server, an external storage device such as a hard disk, a floppy disk, an MO, a memory stick (trademark), or a smart medium (trademark).

Content used in the present invention includes data such as character data, still image data, moving image data, animation image data, presentation data, slide data, voice data, game software, and application program software, and consists of, for example, a file format as described below.

As a file format of a still image, there are, for example, JPEG (Joint Photographic Experts Group), PICT (QuickDraw Picture Format), BMP (Bitmap), GIF (Graphics Interchange Format), PNG (Portable Network Graphics), and the like.

As a file format of a moving image, there are, for example, MPEG-1, MPEG-2, MPEG-4, RV (Real Video), MNG (Multiple-image Network Graphics), AVI (Audio Video Interleaved) , and the like.

As a file format of a voice, there are, for example, AIFF (Audio Interchange File Format), WAV (Waveform), AU, RA (Real Audio), MEPG-1 voice compression system, MPEG-2 voice compression system, MPEG-4 voice compression system, and the like.

In addition, as a file format according to a multiplexed system of a moving image and a voice, there are, for example, QUICKTIME, MPEG-1, MPEG-2PS, and the like.

In addition, as an example of a document file format, PDF (Portable Document Format) is known and, as a compression file format with archive function, zip, lzh, and the like are known.

Further, various file formats other than the above-mentioned ones can be used.

Conventionally, it has been usually performed to make information such as a file name, a file creation data and time, and a file creator name incidental to these files as header information or the like of a file other than data of content itself.

In the present invention, as described below, the data structure according to first to twelfth aspects of the present invention is adopted, whereby appropriate charging according to detailed conditions such as a size, a resolution, and an output method of content can be performed.

In addition, attribute information included in content to be stored in the content server master set and the content server slave set can include a content ID for identifying the content and a server ID indicating a location of the content.

In addition, in a second aspect of the present invention, one or plural pieces of information among information such as a keyword indicating details of the content, categories for classifying details of the content, and types of content files are content to be stored in the further included in the attribute information included in the content to be stored in the content server master set and the content server slave set.

Further, in an eighth aspect of the present invention, a directory service system for content according to a sixth or seventh aspect of the present invention is provided, which is characterized in that the content is content which is encoded according to its own format decodable by using a decode key.

Here, a retrieval function which is one of characteristics of the directory service system of the present invention will be described.

A directory service system for content according to a third aspect of the present invention is characterized in that content stored in the server master set and the server slave set is content which can be retrieved, with the attribute information as a key, designating one or plural pieces of information among information such as a price for use of the content, a keyword indicating details of the content, categories for classifying details of the content, and types of content files.

Since such attribute information is included incidentally to data, even if a system configuration including distributed servers including a server master set and a server slave set is adopted, information can be retrieved by combining a price (e.g., 500 yen or less) for using content, a keyword, and the like.

Moreover, as in a fourth aspect of the present invention, information for applying limitation on a price for use of content and the use, for example, limitation on a method of use, and limitation on age is included in the attribute information, whereby a system can be adapted such that only usable content is retrieved.

### (First content embodiment)

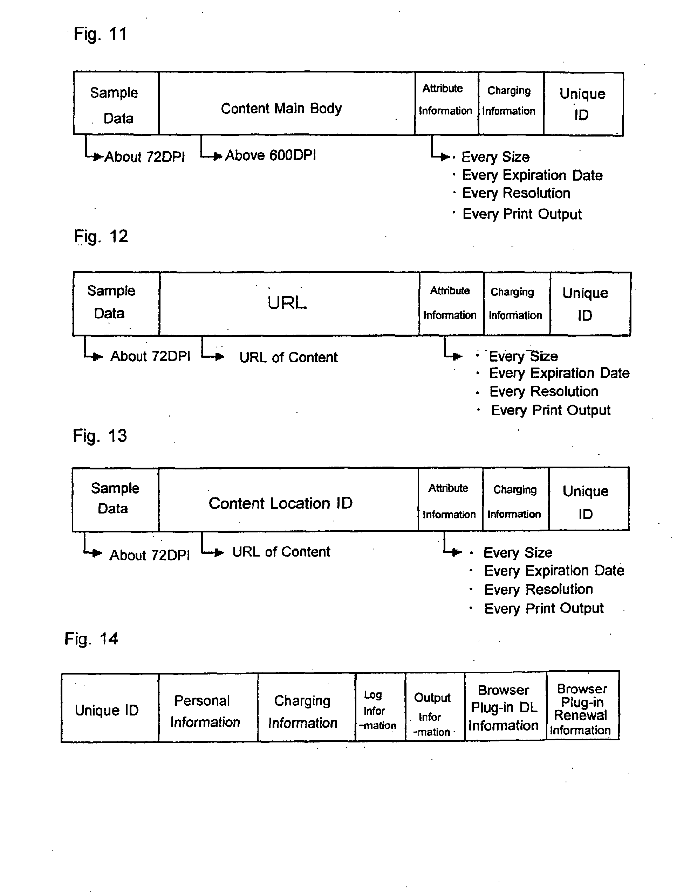

An example of a data structure of content according to a tenth aspect of the present invention is as shown in Fig. 11, in which sample data of the content, data of a content main body, charging information concerning a prices for use of the content, attribute information concerning control for use of the content, and a unique ID for identifying the content are included.

As a desirable example of the data format, for example, there is a format in which the sample data is an image of the JPEG format with a resolution of 72 dpi or more and the data of the content main body (image in this context) is an image of an original format having a resolution of 600 dpi or more.

Conventionally, for example, in the case in which content such as an image is displayed on a WEB, a content main body such as an image has been displayed by, for example, displaying thumbnails in a small size (and a low resolution as well) and, next, clicking a thumbnail of an image desired to be browsed out of the thumbnails. These are separate images, that is, a content image and a thumbnail image are saved separately.

In the above-mentioned embodiment, these are managed as one data and, at the same time, a unique ID capable of uniquely identifying pertinent content out of a large number of contents is given to the data, and charges for use of the content by method of use such as downloading or printing of the content, by output service, or by size or resolution of the content, that is, the above-mentioned charging information is managed as data of one record.

In the present invention, the various problems as described above are solved by providing at least fields of sample data, data of a content main body, charging information, attribute information, and a unique ID in one record and usually providing symbols indicating, for example, which part of content is sample data at the time when, for example, these data are read out.

This is true for a data structure of content in other aspects of the present invention.

### (Second content embodiment)

An example of a data structure of content according to an eleventh aspect of the present invention is as shown in Fig. 12, in which sample data of the content, information on a URL where a content main body is located, charging information concerning a price for use of the content, attribute information concerning control for user of the content, and a unique ID for identifying the content are included.

As a desirable example of the data format, for example, there is a format in which the sample data is an image of the JPEG format with a resolution of 72 dpi or more and the data of the content main body (image in this context) is an image existing in a place designated by the above-mentioned URL.

### (Third content embodiment)

An example of a data structure of content according to a twelfth aspect of the present invention is as shown in Fig. 13, in which sample data of the content, a content location ID for identifying a location on a network of a content main body, charging information concerning a price for use of the content, attribute information concerning control of use of the content, and a unique ID for identifying the content are included.

As a desirable example of the data format, for example, there is a format in which the sample data is an image of the JPEG format with a resolution of 72 dpi or more and the data of the content main body (image in this context) is an image existing in a place designated by the above-mentioned content location ID. Data management according to a database is applied to the content location ID in a storage device of a database server or the like, and an ID given for each content, a URL where the content is located, and data specifying a place where the content is located on a network such as an LAN are stored therein associated with each other. The database is referred to with the content location ID as a key to specify a location of the content main body.

In the content according to any of the tenth to twelfth aspects of the present invention, one or plural data among the following data can be included in the charging information provided in the content.

The data are conditions such as a size, a term of validity, a resolution, and an output method.

In addition, the attribute information concerning control for use of the content is attribute information for limiting users of the content to, for example, members only, attribute information for controlling distribution or use of the content, or the like.

Various forms of data such as image data, moving image data, an animation image, voice data, character data, computer game software, a computer program, and a combination of them are included in the content.

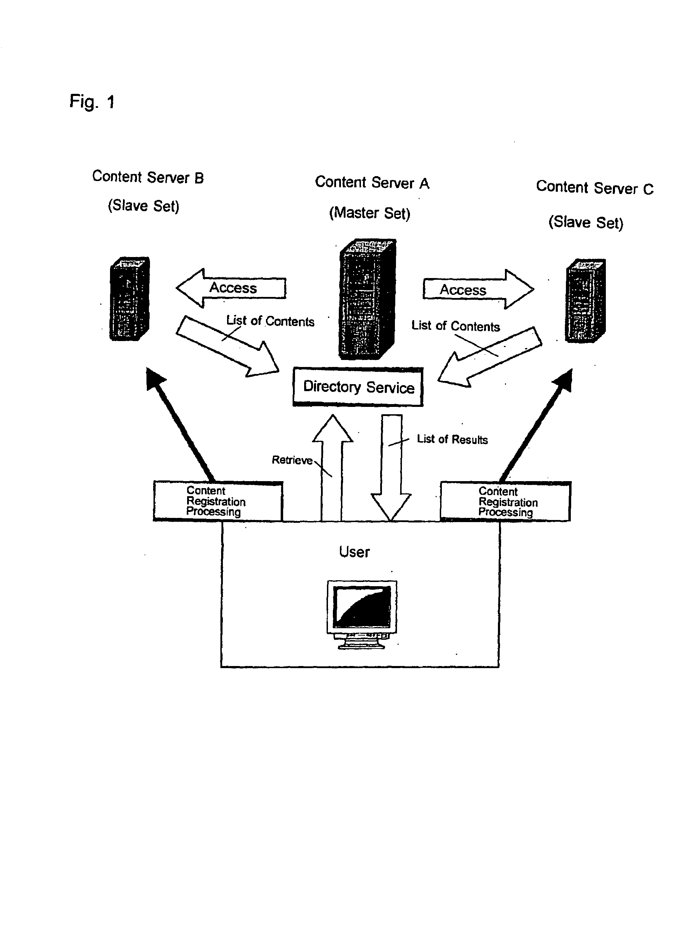

Fig. 1 is a system diagram showing an example of a basic system configuration of a directory service system for content of the present invention.

A content server is a storage apparatus for storing the above-mentioned various contents in the system of the present invention in which charging at the time of download and charging at the time of use are provided for distribution of content.

In the content server master set, information indicating a location of the content server slave set to be connected to a computer network and authority for performing access to content stored in the content server slave set are set. Consequently, if a system can be adopted which can manage contents stored in content servers distributed to exist on a network unitarily to make it possible to retrieve the contents, a location of every content can be grasped and managed and, moreover, a directory service system for content using this system can be established..

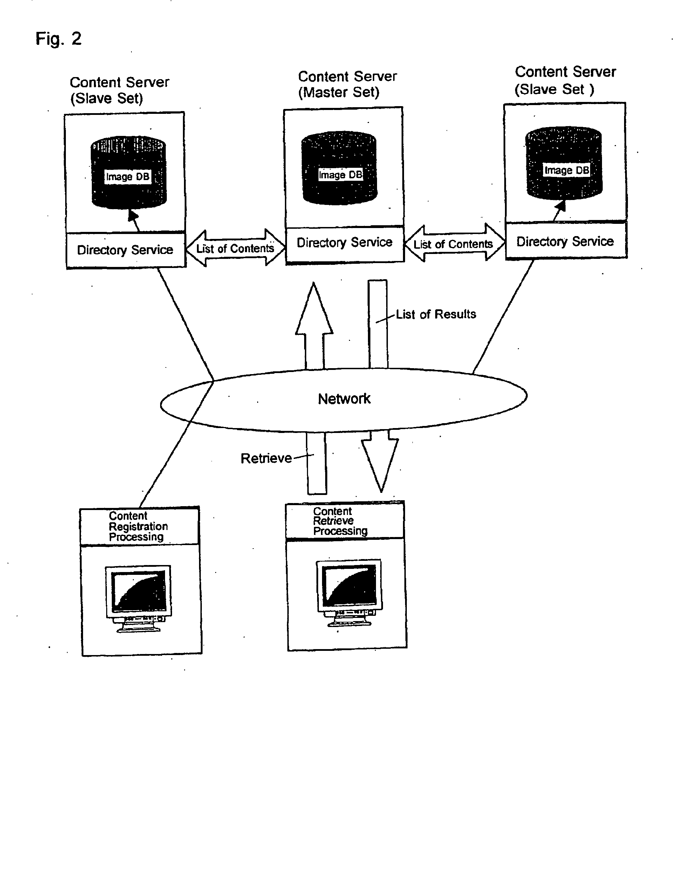

Fig. 2 is a block diagram showing a basic configuration and function of the system in accordance with the present invention.

A basic hardware configuration of the system of the present invention is provided with a content server master set and one or plural slave sets for storing content such as an image on a computer network.

In addition, if necessary, the system includes a commerce server for managing information on users, information on use and purchase of content by users, a WEB server for providing a portal site or the like for content retrieval, and the like.

Moreover, if necessary, a large database server, an image storage/distribution server, a WEB server, a mail server, an application server, a retrieval server, an authentication server, and the like can be provided in the system, and it is desirable to secure safety for the various servers by multiplexing them as required.

Note that these are examples of desirable configurations, and the servers may adopt any configuration as long as functions of the respective servers described below in detail can be realized because locations of the servers can be specified according to a URL or the like.

In addition, the respective servers such as the content server, the portal WEB server, and the commerce server may exist in a physically identical place. However, even in the case in which the servers exist in places physically and spatially apart from each other, the system of the present invention can be realized because locations of the servers can be specified according to a URL or the like.

In addition, for example, if the same function can be realized such as causing an identical one server to perform the functions of the content server and the commerce server, various configurations can be adopted.

Moreover, a directory service system for content according to a fifth aspect of the present invention is characterized in that the server slave set includes a slave set server installed by an administrator different from an administrator of the server master set and is a distributed system.

In this embodiment, if the server master set of the directory service system manages information such as a location by adopting a predetermined data format used in the system of the present invention, anybody can install content, which is managed according to a directory and becomes an object of retrieval, and the server slave set which stores the content.

Consequently, by adopting the predetermined data format, data which can perform appropriate charging can be provided to the directory service without using special hardware or the like.

The directory service system for content of the present invention is provided with a content server for storing content such as an image on a computer network.

A function of the master set of the content server includes processing as described below.
(1) Receiving a processing request from a user terminal.
(2) Managing a location of the content server slave set and a location of content to be stored in the master set and the slave set.
(3) Sending the processing request from the user terminal to the server slave set.
(4) Sending a processing result to the user terminal.
(5) Performing registration, update, and deletion of content.
(6) Encoding content.

A function of the slave set of the content server includes processing as described below.
(1) Receiving a processing request form the content server master set.
(2) Managing a location of content to be stored in the content server slave set.
(3) Sending a processing result to a user terminal.
(4) Performing registration, update, and deletion of content.

Note that the content server master set and the content server slave set are desirably connected according to a highly secure system.

Next, it is usual that the directory service system for content of the present invention is provided with a WEB server for managing a portal site which a user accesses in order to retrieve and use content.

In addition, the directory service system for content of the present invention is desirably provided with a commerce server for managing information on users and information on use and purchase of content by the users.

A function of the commerce server includes processing as described below.
(1) Receiving a processing request from the WEB server of the portal site and sending a processing result to the content server in response to the request.
(2) Performing authentication of a user (authentication server function).
(3) Performing registration, update, and deletion of a user.
(4) Managing charging information of an image distribution service for a user (e.g., a user ID, a date of use, an image number, an image size, a resolution, a term of validity, a method of output/use such as print output) (charging server).
(5) Managing information on registration of content.
(6) Managing an image distribution service log of a user.
(7) Connecting the commerce server and the content server according to a highly secure system.

In content to be stored in the content server master set and the content server slave set, attribute information to be used as a key when the content is retrieved and extracted or selected is included.

As the attribute information, there is information such as a content ID for identifying content, a server ID indicating a location of the content, a keyword indicating details of the content, categories for classifying the details of the content, and types of content files, and the attribute information is used as a key at the time of performing retrieval through the content server master set in a user terminal by combination of one or plural pieces of information among them.

In the content server, contents are stored in a directory format such as a hierarchical structure, a tree structure, or the like for each genre, each type of a file, or the like. Data is added in the same manner in the case in which new content is stored.

Each content server including a master set and a slave set manages a location of each content in a server according to a content ID and, at the same time, the content server master set manages in which content server the content is located according to a server ID.

As described above, in the content server master set, information indicating a location of the content server slave set to be connected to a computer network and authority for performing access to content stored in the content server slave set are set. The directory service system for content performs processing in which, in response to a request for a desired content from a user terminal, the content server master set receives the request, processing for retrieving and extracting content corresponding to a desired condition of the requested content from the content server master set and the content server slave set, and processing for sending an extracted result to the user terminal, thereby performing retrieval processing of the content server provided with the directory structure.

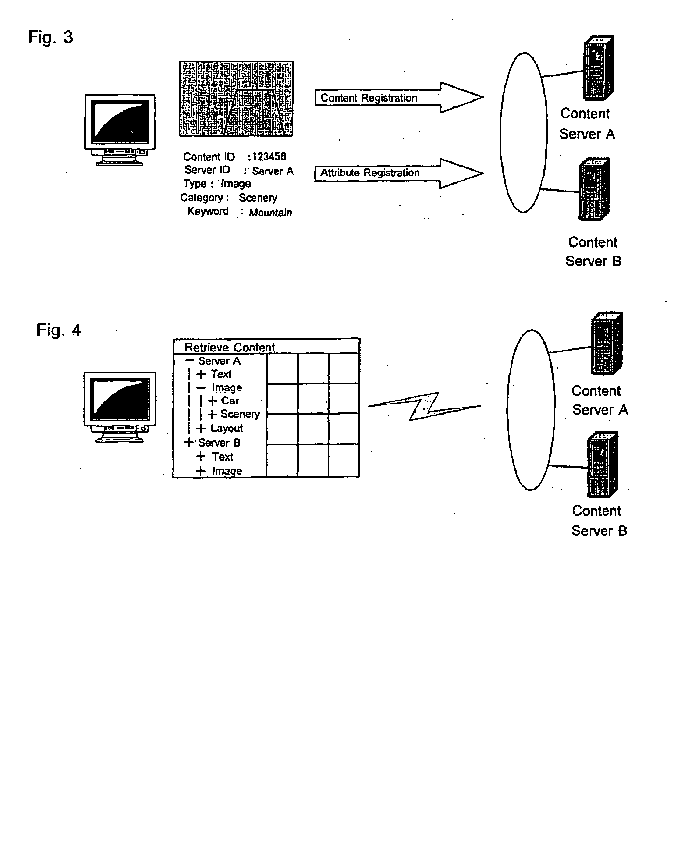

Fig. 4 is a diagram schematically showing a system in performing retrieval processing using such distributed servers.

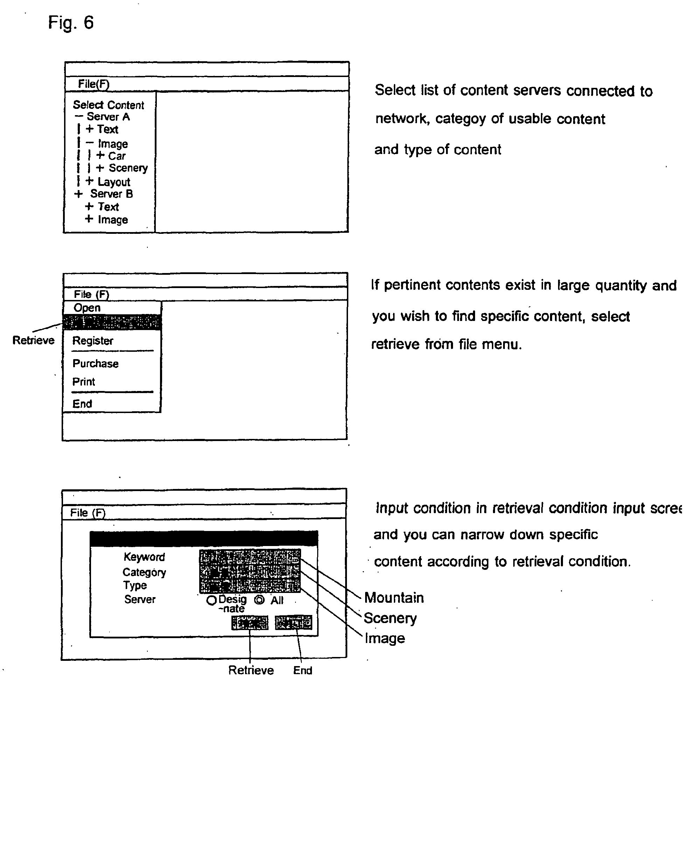

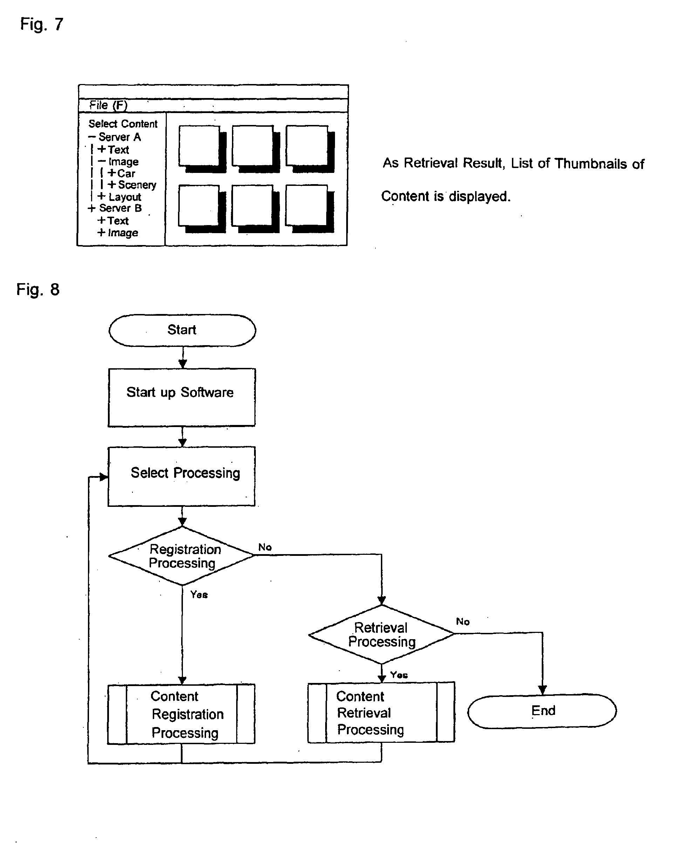

In addition, Figs. 6 and 7 are screen image diagrams showing examples of a screen image of a user terminal at the time when retrieval processing is performed.

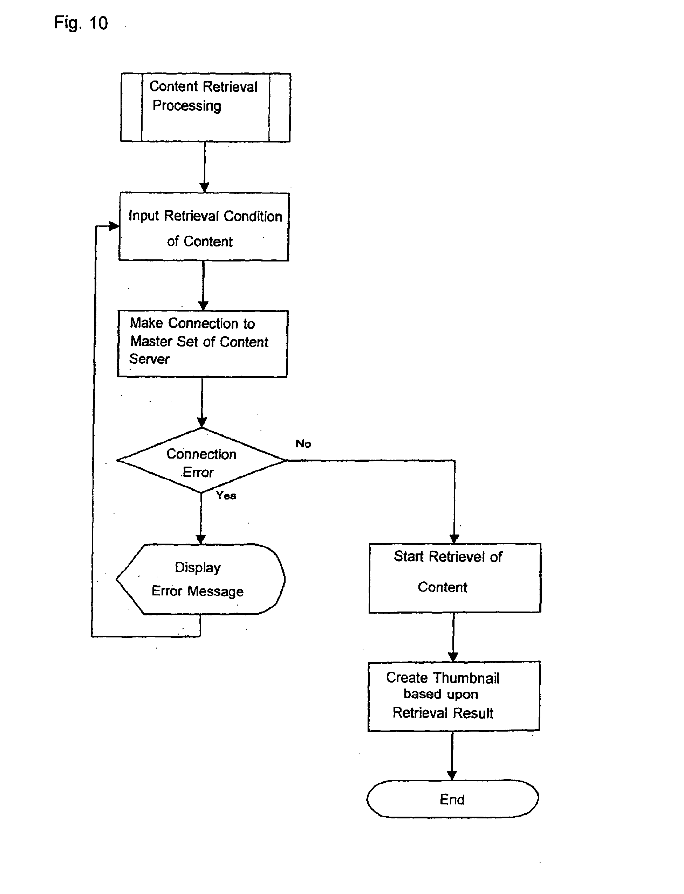

Fig. 10 is a flowchart showing a flow of basic processing at the time when content retrieval processing is performed.

Here, the user terminal is connected to a WEB site cooperating with the server master set or the server slave set via a network.

The user terminal selects a list of content servers, categories of usable contents, types of contents, and the like.

The user terminal can also input retrieval conditions to retrieve content out of a large number of contents.

Upon sending a request for retrieval, the user terminal is connected to the content server master set.

The content master set retrieves contents it owns and stores for itself and, at the same time, retrieves contents owned and stored by all server slave sets to be connected to the content master set.

Then, the content server master set sends data concerning content extracted as a result of retrieval to the user terminal and causes it to display a list of retrieval results. Here, it is desirable that the content server master set causes the user terminal to display sample content like a thumbnail image of the content.

### (First charging system embodiment)

Here, in a directory service system for content according to a tenth aspect of the present invention, sample data of the content, data of the content main body, charging information concerning a price for use of the content, attribute information concerning control for use of the content, and a unique ID for identifying the content are included in the content.

In this embodiment, the directory service system for content is provided with a content server for storing content such as an image and a commerce server for managing information on users and information on use and purchase of content by the users on a computer network, and sample data of the content, data of the content main body, charging information concerning a price for use of the content, attribute information concerning control for use of the content, and a unique ID for identifying the content are included in the content.

Charging at output time is performed by processing in which a user retrieves the content in a terminal of the user to display a result of the retrieval, processing for setting an authentication key for control of charging to the user and use of content when the user downloads the content, processing for performing authentication of the user accessing the system using the authentication key, processing for sending the content to the user terminal in response to use request information of the content designated and sent by the authenticated user and detecting attribute information included in the content in the user terminal, and processing, in the case in which charging processing based upon the use request information is authenticated and the content is outputted, for performing decode of the content based upon the use request information to output the content.

The directory service system for content is characterized in that decode and output of the content is impossible in the case in which the charging processing based upon the use request information is not authenticated.

A flow of basic processing of this embodiment will be hereinafter described.

Note that the flow of processing shown here is an example and is not limited to this.

First, in order to retrieve content using the system of the present invention and perform use of the content such as output thereof, a user needs to prepare an authentication key (e.g., USB key) for hardware beforehand or in using the system.

An ID for identifying a user is set in the authentication key.

In addition, attribute information for limiting a user of content and controlling distribution and use of content is set.

Fig. 14 is a diagram showing information to be set in an IC chip of a USB in the case in which a USB key is used as an example of the authentication key.

Information such as a unique ID, individual information, charging information, attribute information, log information, and output information is set.

Here, a terminal of a user includes, other than a computer terminal such as a personal computer, various terminals such as a personal digital assistant such as a cellular phone provided with a browsing function, a dedicated terminal, and information consumer electronics such as a WEB-TV and a game device.

In a portal site for content retrieval, it is desirable to register member information for a user who receives service for using content such as output as a result of retrieving content and register the user as a member. As the member information, there are an address, a name, a telephone number, an electronic mail address, a charging (settlement) method, and the like.

An authentication key for authentication and content charging described later is issued according to registration and management of such member information.

Note that, in a form in which the authentication key is issued online, it is desirable that a user performs input or the like of member information in the portal site and sends the member information, the sent information is stored in a commerce server, and the authentication key is issued after the information undergoes examination or the like.

The member information is managed in the commerce server.

In addition, the commerce server performs registration, update, and deletion of a user.

Alternatively, as in a fifteenth aspect of the present invention, in the case in which a content output shop terminal provided by a system administrator side is provided being connected to a computer network, the authentication key can also be issued at a content output shop according to input/transmission of information from the content output shop terminal.

In the case in which a user uses/purchases content such as an image from the portal site, there are a method of performing charging at the time of download and a method of performing charging at the time of use. Here, an embodiment in which charging is performed at the point when content is printed or otherwise outputted will be described.

Here, the user performs browsing in order to select content which the user wishes to use out of various genres or content forms. The system is set such that the user in the portal site can only see a sample image for an image of any form.

That is, sample data among data included in the above-mentioned content is displayed on the WEB site.

The content is stored in the content server and, according to a user's act such as selection of content, the commerce server receives a processing request from the portal WEB server.

The content server receives a processing request from the commerce server and sends a processing result to the commerce server, and the commerce server sends the processing result to the WEB server, whereby the sample data is, for example, displayed.

That is, from the unique ID provided in the selected content, the content server refers to content registration information provided in the commerce server to extract the pertinent content stored in the content server and reads out sample data in the pertinent content, thereby sending the processing result to the commerce server. The commerce server sends the processing result to the WEB server, whereby the sample data is, for example, displayed.

In the case of voice data, a sample voice is outputted. The commerce server and the content server are connected according to a highly secure system.

In addition, the content server performs registration, update, and deletion of content.

Charging information (rules for charging) for each content is set in advance by size, by resolution, by term of validity, and the like of content such as an image in the commerce server, and the commerce server (charging server) manages the information by user and by content ID.

The charging information for each content is a charging point according to, for example, a classification, an attribute, a method of use, and the like as described below.

It is a charging point according to classification, attribute, and utilization methods by content, by content size, by content output size (A0, A1, A2, A3, A4, ...), by resolution, by term of validity, by print output destination, by member, by content of license agreement, by connection base time system, and the like.

In addition, the commerce server manages information on registration of content. The information on registration of content is information for associating information such as a location, a genre, a data format, and a creator or owner of the content, and a destination of payment of a charged amount with a content ID and is stored in the commerce server.

Next, the user selects content, which the user wishes to download, out of browsed sample data of content, determines whether or not the user downloads the content, and sends information on the content, and the portal WEB server receives the information.

If the user does not download the content, he/she performs processing such as moving to another WEB page or returning to the previous page.

If the user downloads the content, processing described below is performed.

The commerce server receives a processing request from the portal WEB server and performs authentication of the user (authentication server function).

Authentication for charging to a user is desirably performed with a hardware authentication key (e.g., a USB key) . That is, information for performing the authentication is stored in hardware such as the USB key, whereby the information is set in a terminal of the user when the charging processing is performed.

The authentication key for control for charging to the user and use of content is set when the user downloads content.

An ID for identifying a user is set in the authentication key (USE key, etc.). Moreover, measurement of money or a usable point similar to money which a user uses at the time of charging processing is set in the authentication key.

Other than the above, information for user authentication according to various authentication systems such as a password, a one-time password to be used only one time, or a system for using a public key and a secret key can be provided in the authentication key.

When a user uses a content charging system, he/she uses a point for calculating an amount or the like for performing charging. As described above, the point is set for each content according to a size, a resolution, a term of validity, or the like of content such as an image.

As to the information such as the user ID stored in the authentication key and the measurement of money or a usable point similar to money, which is stored in association with the user ID, the commerce server (charging server) can manage the information by user and, in this case, authentication of a user and management of charging information for each user can be performed by collating both of them.

Next, the commerce server (authentication server) performs authentication, judges whether or not download, use, or the like of content is permitted as a result of the authentication, returns a result of the processing to the portal WEB server, and sends an HTML file or the like indicating the result of judgment on propriety of authentication to a user terminal. That is, a result of authentication is displayed on a screen of the user terminal.

In addition, if download, use, or the like of the content is permitted according the authentication, the commerce server can send a download instruction to the content server designating the user terminal as a transmission (download) destination and proceed to download processing. Before the processing, it is also possible to add processing for further urging the user to confirm whether or not download may be performed.

If these are cleared, the download processing is performed.

That is, from the unique ID provided in the selected content, the content server refers to content registration information provided in the commerce server to extract the pertinent content stored in the content server and reads out content data in the pertinent content, whereby processing for sending (downloading) the content data to the user terminal is executed and, in the case in which charging processing is performed at the time of download, the content server reads out pertinent charging information in the pertinent content and sends a processing result of download (charging) to the commerce server and, at the same time, updates information on a charging point held in the authentication key, and the commerce server sends a processing result to the content server, whereby download processing is executed.

In addition, it is desirable to manage a use service log of download or the like by the user in the commerce server.

Note that, in a usual form, content which the user can browse at a stage before the content undergoes download/charging processing is the above-mentioned sample content.

Here, at a stage in which download processing is performed, according to download of content (i.e., content main body which is not sample data), the user acquires the content. However, since the content stored in the content server is encoded into a predetermined data format, the content main body is protected such that it is impossible to use it.

Charging information concerning a price for use of content and attribute information concerning control for use of content are included in the downloaded content.

Attribute information for controlling use of content is included in the content used for the present invention.

Conventionally, for example, in a network printer applicable to multi-protocol, there is known a technique with which charging information and print object data are included in received communication print data in order to make it possible to perform charging management correctly.

In this way, a network printer which can perform charging management is realized by using multi-protocol communication print data including charging information and print object data. However, in the present invention, charging information for performing charging processing according to a size, a resolution, an output method, or the like of content and attribute information for performing content distribution/use control or the like such as limitation on a user by member/non-member, limitation on an output method/the number of times are included in data of content.

Here, at the time of output such as printing, that is, at a stage in which charging processing is performed, according to decode of content (i.e., content main body which is not sample data), a user becomes capable of outputting content.

In this way, since the content stored in the content server is encoded into a predetermined data format, the content server performs download processing and, subsequently, performs processing for sending the content to the user terminal in response to use request information for content designated and sent by an authenticated user, and detecting attribute information included in the content in the user terminal.

In the case in which the charging processing based upon the use request information is authenticated and the content is outputted, the content server performs charging at output time according to processing for decoding of the content based upon the use request information to output the content.

The system is characterized in that decode and output of content is impossible in the case in which the charging processing based upon the use request information is not authenticated.

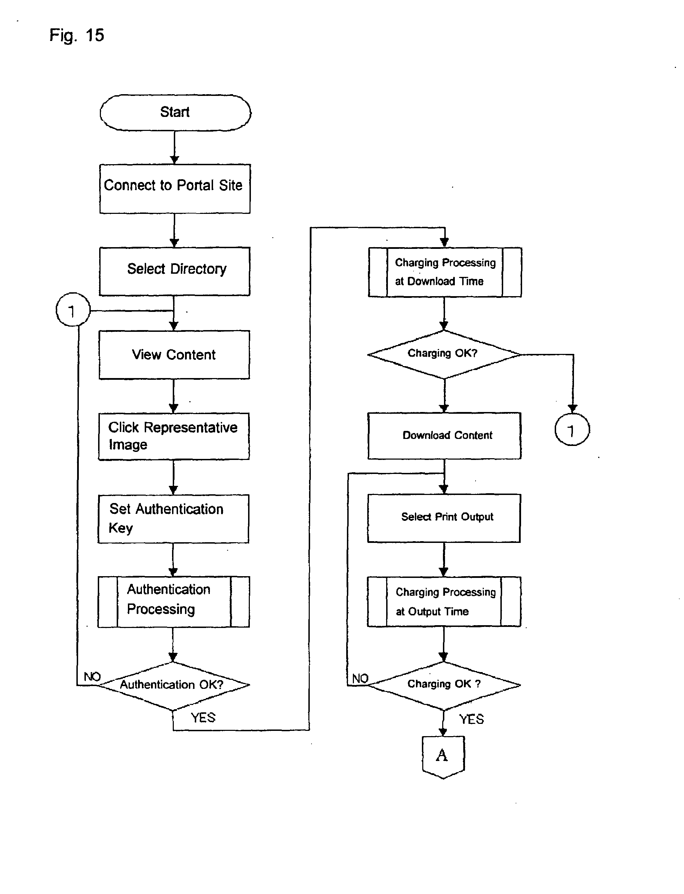

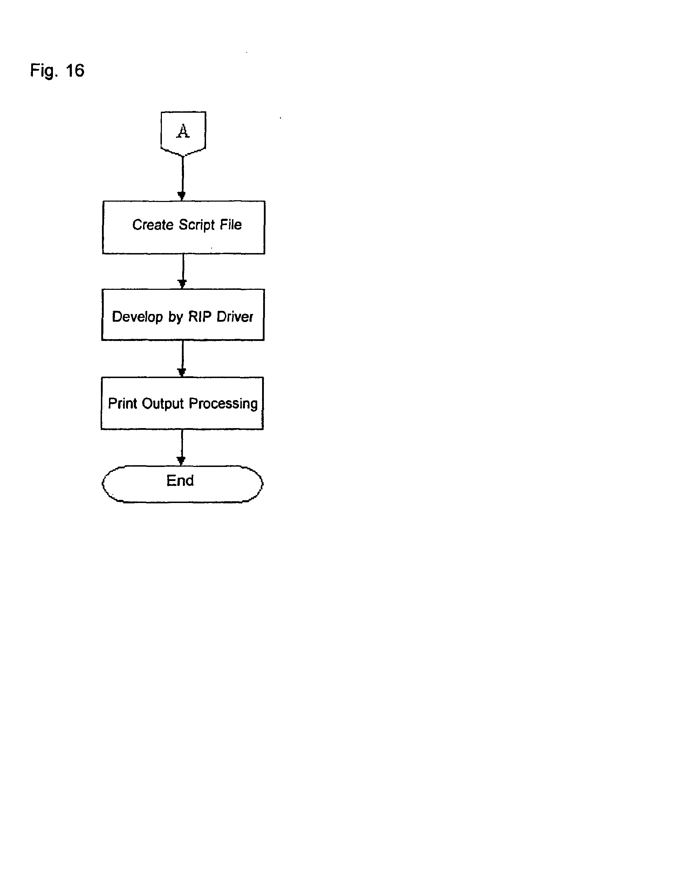

Figs. 15 and 16 are flowcharts showing a flow of basic processing in the case in which the content server performs charging at output time according to the processing for performing decode of content based upon the use request information to output the content.

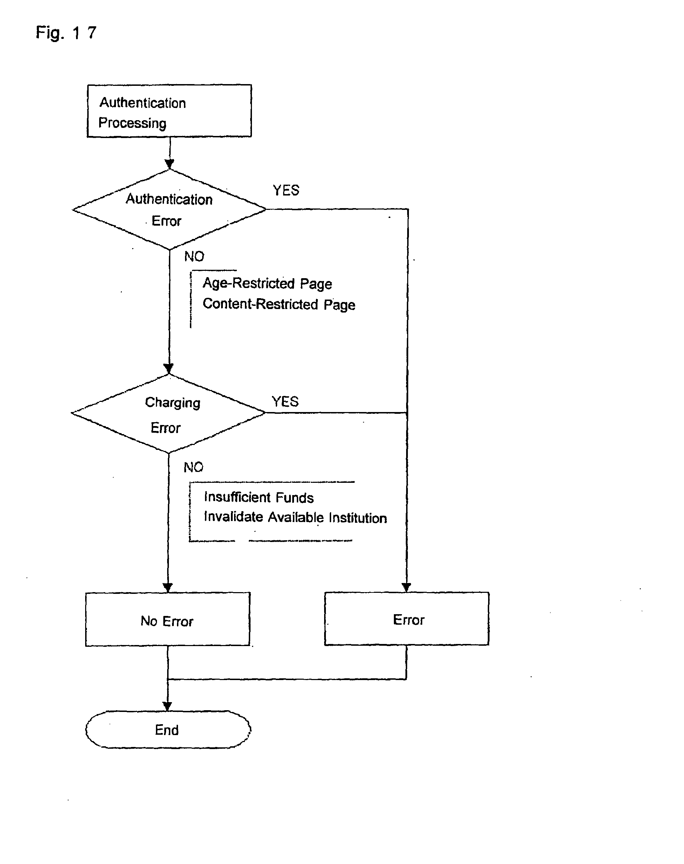

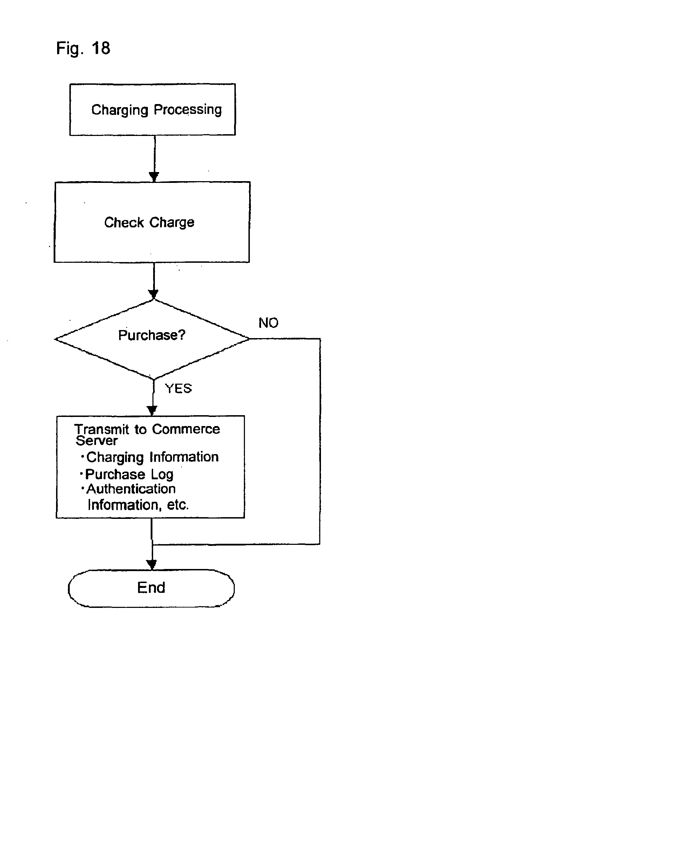

In addition, Fig. 17 shows a detailed flow of authentication processing and Fig. 18 shows a detailed flow of charging processing.

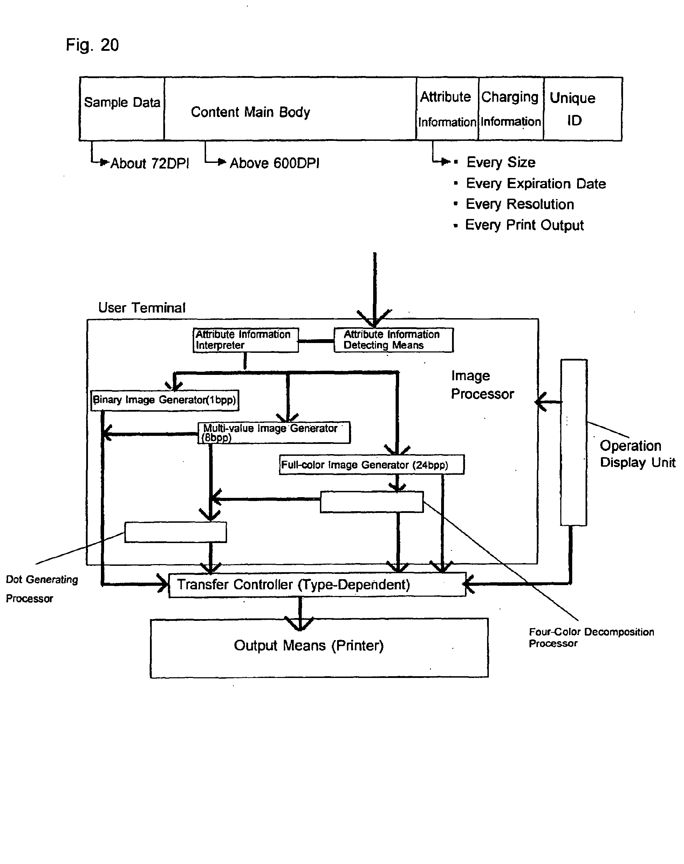

Fig. 20 is a block diagram showing an example of data for, in a user terminal to which image content has been downloaded, detecting and interpreting attribute information included in content and performing decode and output in accordance with attribute information concerning control of use of the content.

As described above, it is desirable to manage a use service log of download or the like by the user in the commerce server. The use service log is sent from a user terminal to the system of the present invention and is particularly necessary for completing charging processing on condition that output processing such as printing is performed normally.

### (Second directory service system embodiment)

Next, a system according to an eleventh aspect of the present invention will be described.

In this embodiment, on a computer network, the system is provided with a content server for storing content such as an image, a portal WEB server which a user accesses in order to use and purchase the content, and a commerce server for managing information on users and information on use/purchase of content by the users. Sample data of the content, information on a URL where a content main body is located, charging information concerning a price for use of the content, attribute information concerning control for use of the content, and a unique ID for identifying the content are included in the content.

Charging at output time is performed by processing in which a user displays the content at a terminal of the user, processing for setting an authentication key for control of charging to the user and use of content when the user downloads the content, processing for performing authentication of the user accessing the system using the authentication key, processing for sending the content to the user terminal in response to use request information of the content designated and sent by the authenticated user and detecting attribute information included in the content in the user terminal, and processing, in the case in which charging processing based upon the use request information is authenticated and the content is outputted, for performing decode of the content based upon the use request information to output the content.

The system is characterized in that decode and output of the content is impossible in the case in which the charging processing based upon the use request information is not authenticated.

Figs. 15 and 16 are. flowcharts showing a flow of basic processing in the case in which the decode key is received and charging at output time of content is performed.

In addition, Fig. 17 shows a detailed flow of authentication processing and Fig. 18 shows a detailed flow of charging processing.

In this embodiment, content includes sample data of the content, information on a URL where a content main body is located, charging information concerning a price for use of the content, attribute information concerning control for use of the content, and a unique ID for identifying the content. A basic flow of the processing is assumed to be common to the above-mentioned second charging system embodiment.

In this embodiment, the content is stored in the content server in association with a unique ID of content registration information managed by the commerce server. However, since the information on a URL where the content main body is located is included instead of the content data included in the content, data of the content main body must be stored in a place designated by the URL separately from the content.

The user can browse or download the content before receiving processing of a decode key. However, since the charging processing has not been completed at this point, it is usual that the data of the content main body is located in the place of the URL and the user is still in a state in which use/output according to the attribute information for control for use of the content included in the content is limited such that the user is capable of browsing or outputting only the sample data of the content.

Here, at the time of output such as printing, that is, at a stage in which the charging processing is performed, the user becomes capable of outputting the content according to decode of the content (i.e., the content main body which is not the sample data).

In this way, since the content stored in the content server is encoded into a predetermined data format, the content server performs download processing and, subsequently, performs processing for sending the content to the user terminal in response to use request information for content designated and sent by an authenticated user, and detecting attribute information included in the content in the user terminal.

In the case in which the charging processing based upon the use request information is authenticated and the content is outputted, the content server performs charging at output time according to processing for decoding of the content based upon the use request information to output the content.

The system is characterized in that decode and output of content is impossible in the case in which the charging processing based upon the use request information is not authenticated.

Figs. 15 and 16 are flowcharts showing a flow of basic processing in the case in which the content server performs charging at output time according to the processing for performing decode of content based upon the use request information to output the content.

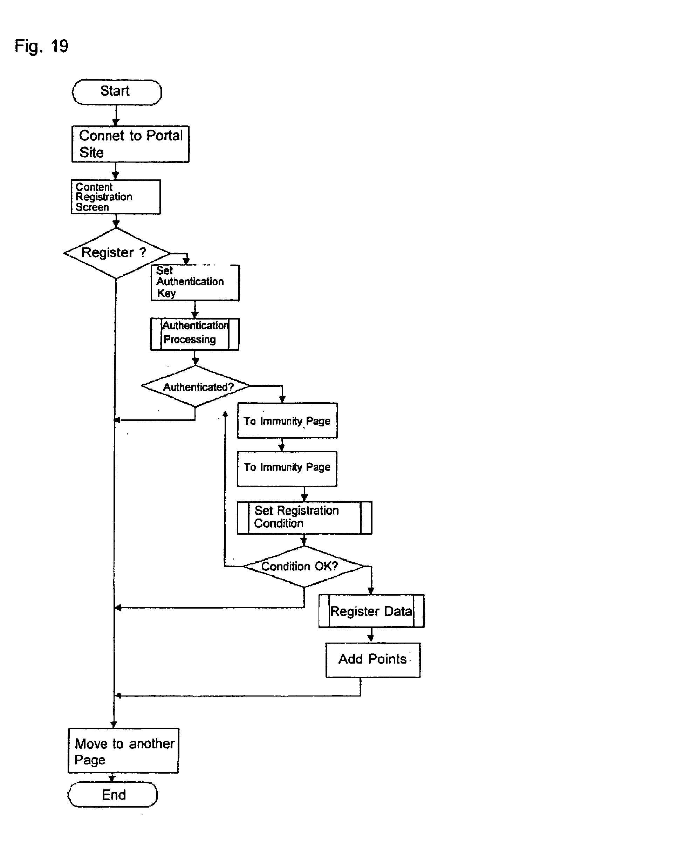

In addition, Fig. 18 shows a detailed flow of authentication processing and Fig. 19 shows a detailed flow of charging processing.

Fig. 20 is a block diagram showing an example of data for, in a user terminal to which image content has been downloaded, detecting and interpreting attribute information included in content and performing decode and output in accordance with attribute information concerning control of use of the content.

As described above, it is desirable to manage a use service log of download or the like by the user in the commerce server. The use service log is sent from a user terminal to the system of the present invention and is particularly necessary for completing charging processing on condition that output processing such as printing is performed normally.

In addition, in the case of this embodiment, since the information on a URL where the content main body is located is included, data of the content main body is stored in a place designated by the URL separately from the content.

Therefore, the content includes, in particular, embodiments as described below.

A file such as an HTML file, an XML file, or a CHTML file to be displayed on a WEB (here, including, in particular, a closed network such as an intranet) is content itself, and the sample data of the content, the information on a URL where a content main body is located, the charging information concerning price information of the content, the attribute information concerning control for use of the content, and the unique ID for identifying the content are included in this file.

The content main body exists in a place designated by the URL.

In addition, in a tag in a source of the file to be defined independently, the charging information concerning price information of the content, the attribute information concerning control of use of the content, and the unique ID for identifying the content are included in the file. The independent definition of the tag is particularly effective for performing content management in cooperation with a database storing the content main body in the file using XML or the like.

At the time when the content is used, information is sent and received between a user terminal and the system of the present invention, and the user terminal detects the charging information and the attribute information defined by the tag and outputs/uses the content in a form in which the content is subjected to charging processing and available for output or the like.

### (Third directory service system embodiment)

Next, a directory service system for content according to a twelfth embodiment of the present invention will be described.

In this embodiment, on a computer network, the system is provided with a content server for storing content such as an image, a portal WEB server which a user accesses in order to use and purchase the content, and a commerce server for managing information on users and information on use/purchase of content by the users. Sample data of the content, a content location ID for identifying a location on a network of a content main body, charging information concerning a price for use of the content, attribute information concerning control for use of the content, and a unique ID for identifying the content are included in the content.

Charging at output time is performed by processing in which a user displays the content at a terminal of the user, processing for setting an authentication key for control of charging to the user and use of content when the user downloads the content, processing for performing authentication of the user accessing the system using the authentication key, processing for sending the content to the user terminal in response to use request information of the content designated and sent by the authenticated user and detecting attribute information included in the content in the user terminal, and processing, in the case in which charging processing based upon the use request information is authenticated and the content is outputted, for performing decode of the content based upon the use request information to output the content.

The system is characterized in that decode and output of the content is impossible in the case in which the charging processing based upon the use request information is not authenticated.

Figs. 15 and 16 are flowcharts showing a flow of basic processing in the case in which the decode key is received and charging at output time of content is performed.

In addition, Fig. 17 shows a detailed flow of authentication processing and Fig. 18 shows a detailed flow of charging processing.

In this embodiment, content includes sample data of the content, a content location ID for identifying a location on a network of the content, charging information concerning price information of the content, attribute information concerning control for use of the content, and a unique ID for identifying the content. A basic flow of the processing is assumed to be common to the above-mentioned second and third directory service system embodiments.

In this embodiment, the content is stored in the content server in association with a unique ID of content registration information managed by the commerce server. However, since the content location ID for identifying a location on a network of the content main body is included instead of the content data included in the content, data of the content main body must be stored in a place designated by the content location ID separately from the content.

The user can browse or download the content before receiving processing of a decode key. However, since the charging processing has not been completed at this point, it is usual that the data of the content main body is located in the place of the content location ID and the user is still in a state in which use/output according to the attribute information for control for use of the content included in the content is limited such that the user is capable of browsing or outputting only the sample data of the content.

Here, at the time of output such as printing, that is, at a stage in which the charging processing is performed, the user becomes capable of outputting the content according to decode of the content (i.e., the content main body which is not the sample data).

In this way, since the content stored in the content server is encoded into a predetermined data format, the content server performs download processing and, subsequently, performs processing for sending the content to the user terminal in response to use request information for content designated and sent by an authenticated user, and detecting attribute information included in the content in the user terminal.

In the case in which the charging processing based upon the use request information is authenticated and the content is outputted, the content server performs charging at output time according to processing for decoding of the content based upon the use request information to output the content.

The system is characterized in that decode and output of content is impossible in the case in which the charging processing based upon the use request information is not authenticated.

Figs. 15 and 16 are flowcharts showing a flow of basic processing in the case in which the content server performs charging at output time according to the processing for performing decode of content based upon the use request information to output the content.

In addition, Fig. 17 shows a detailed flow of authentication processing and Fig. 18 shows a detailed flow of charging processing.

Fig. 20 is a block diagram showing an example of data for, in a user terminal to which image content has been downloaded, detecting and interpreting attribute information included in content and performing decode and output in accordance with attribute information concerning control of use of the content.

As described above, it is desirable to manage a use service log of download or the like by the user in the commerce server. The use service log is sent from a user terminal to the system of the present invention and is particularly necessary for completing charging processing on condition that output processing such as printing is performed normally.

In addition, in the case of this embodiment, since the content location ID for identifying a location of the content main body on a network is included, data of the content main body is stored in a place designated by the content identification ID separately from the content.

Therefore, the content includes, in particular, embodiments as described below.

A file such as an HTML file, an XML file, or a CHTML file to be displayed on a WEB (here, including, in particular, a closed network such as an intranet) is content itself, and the sample data of the content, the information on a URL where a content main body is located, the charging information concerning price information of the content, the attribute information concerning control for use of the content, and the unique ID for identifying the content are included in this file.

The content main body exists in a place designated by the content identification ID.

In addition, in a tag in a source of the file to be defined independently, the charging information concerning price information of the content, the attribute information concerning control of use of the content, and the unique ID for identifying the content are included in the file. The independent definition of the tag is particularly effective for performing content management in cooperation with a database storing the content main body in the file using XML or the like.

At the time when the content is used, information is sent and received between a user terminal and the system of the present invention, and the user terminal detects the charging information and the attribute information defined by the tag and outputs and uses the content in a form in which the content is subjected to charging processing and available for output or the like.

Note that, in any of the above cases, the output method of content includes other methods in the case in which the content is outputted by a printer connected to the terminal of the user or the case in which the content is outputted to an external storage device provided in the user terminal or an external storage device connected to the user terminal.

### (Fourth directory service system embodiment)

Next, a directory service system for content according to a fifteenth aspect of the present invention is characterized in that the system is further provided with a content output shop terminal, which is provided by the system administrator side, being connected to a computer network, and a user is capable of downloading or outputting content by providing an authentication key in the content output shop terminal.

Since an authentication key consisting of hardware such as a USB key is used, the user can perform output such as printing at a content output shop if he/she possesses (or purchases) the authentication key. In addition, a flow of processing to output is common to the above-mentioned embodiments.

### (Fifth directory service system embodiment)

Next, in a sixteenth aspect of the present invention, there is provided a directory service system for content according to any one of the first to fifteenth aspects of the present invention, which is characterized in that the directory service system is a system for registering content consisting of computer readable data using a computer system provided with input means, storage means, control means, display means, and output means, and a server ID indicating a location of the content server is included in the content which is stored in the content server master set and the content server slave set according to processing including: a step of designating attribute information to be used as a key when the content is retrieved and extracted or selected; a step of packaging data of the content based upon the designated information; a step of designating a storage place of the content; and a step of storing the packaged data in an information storage medium.

That is, the directory service system for content is a system for registering content in the content server master set or slave set.

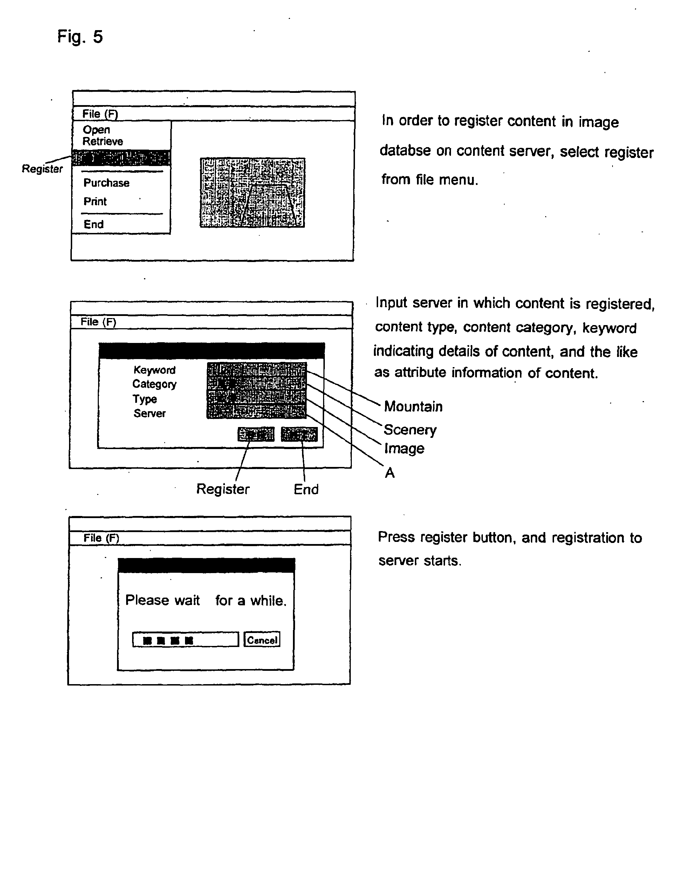

Fig. 5 is a diagram showing a screen image at the time of registration of content.

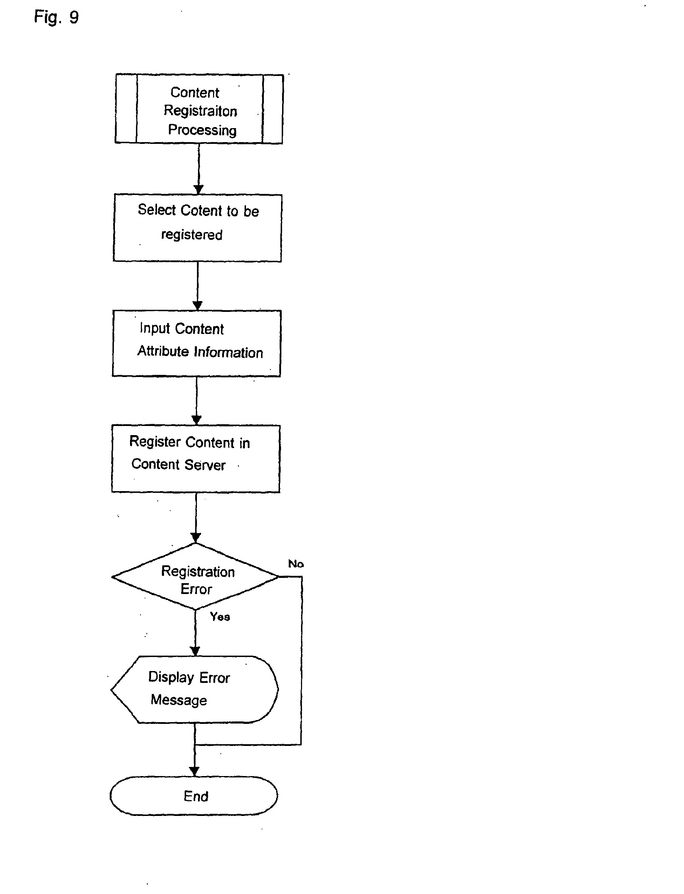

Fig. 9 is a flowchart showing a flow of basic processing at the time when registration processing of content is performed. In addition, Fig. 19 is a flowchart showing a more detailed example in which an authentication key is used for registration processing of content.

In addition, Fig. 3 is a diagram schematically showing processing for designating attribute information such as a content ID, a server ID, a type or category of content, or a keyword in registering content.

A user inputs the information in a user terminal to make connection to a computer network and perform registration.

In addition, the computer system for performing registration provided with input means, storage means, control means, display means, and output means is not limited to a user terminal. That is, a content server administrator or the like can perform registration from a terminal connected to a server or from a terminal connected to a server via a network.

Moreover, in this embodiment, as described above, if the server master set of the directory service system manages information such as a location by adopting a predetermined data format, anybody can install content, which is managed according to a directory and becomes an object of retrieval, and the server slave set which stores the content. Consequently, data which can perform appropriate charging can be provided to the directory service without using special hardware or the like.

However, content which is not desired to be disclosed may be included in content to be registered.

In such a case, in a directory service system for content according to a seventeenth aspect of the present invention, information on whether or not content may be disclosed is included in attribute information of the content to be registered.

The information on whether or not content may be disclosed is selected or designated when the content is encoded to be registered. The distinction of selected or designated disclosure or nondisclosure of the content is included in the attribute information included in the content after encode.

In addition, the distinction of disclosure or nondisclosure can include distinction of disclosure or nondisclosure to a specific group or individual, setting of other disclosure levels, information on limitation of use, or the like.

### (Sixth directory service system embodiment)

In addition, according to a nineteenth aspect of the present invention, there is provided a directory service system for content according to any one of the first to eighteenth aspects of the present invention, which is characterized in that the content is a file such as an HTML file, an XML file, or a CHTML file to be displayed on a computer network, in which sample data for the content, information on a URL where a content main body is located or a content location ID for identifying a location of the content on a network, charging information concerning price information of the content, attribute information concerning control for use of the content, and a unique ID for identifying the content are included.

### Industrial Applicability

As described above in detail, according to the present invention, it is possible to realize a content charging system for performing charging processing at the point when a user has, for example, downloaded or outputted content and, what is more, performing charging processing according to a size, a resolution, an output method, and the like of the content at the time of charging, and performing protection of the content in the case in which charging processing is not performed (i.e., in the case in which download, output, or the like is not performed).

In addition, it is possible to realize a content charging system which is efficient for performing charging processing according to a size, a resolution, an output method, and the like of content and with which a content user is capable of designating the size, the resolution, the output method, and the like at the point when the charging processing is performed.

Moreover, it is possible to realize a content charging system using a computer readable information storage medium having stored therein content data provided with a data structure of content for the above purpose, and the content data.

## Claims

1. A directory service system for content comprising:
a user terminal serving as a client;
a computer network to which a user makes connection from the user terminal;
a content server master set to be accessed via the computer network; and
a content server slave set,
**characterized in that** attribute information to be used as a key when content is retrieved and extracted or selected is included in content to be stored in the content server master set and the content server slave set,
information indicating a location of the content server slave set to be connected to the computer network and authority for accessing the content stored in the content server slave set are set in the content server master set, and
charging information concerning a price for using the content is included in the attribute information included in the content to be stored in the content server master set and the content server slave set, whereby the directory service system for content performs:
processing in which, in response to a request for a desired content from the user terminal, the content server master set receives the request;
processing for retrieving and extracting content corresponding to a desired condition of the requested content from the content server master set and the content server slave set; and
processing for sending an extracted result to the user terminal, and is capable of performing charging processing based upon the attribute information.

2. A directory service system for content according to claim 1,
**characterized in that** one or plural pieces of information among information such as keywords indicating details of the content, categories for classifying details of the content, and types of content files are further included in the attribute information included in the content to be stored in the content server master set and the content server slave set.

3. A directory service system for content according to claim 1 or 2,
**characterized in that** the content stored in the server master set or the server slave set is content which can be retrieved, with the attribute information as a key, by designating one or plural pieces of information among information such as the price for use of content, the keyword indicating details of the content, the categories for classifying details of the content, and the types of content files.

4. A directory service system for content according to claim 3,
**characterized in that**, in the attribute information included in the content stored in the server master set or the server slave set, only content, which can be used designating one or plural pieces of information among information such as limitation on a price for use of content and a method of use and limitation on a user, is retrieved.

5. A directory service system for content according to any one of claims 1 to 4,
**characterized in that** the server slave set includes a slave set server installed by an administrator different from an administrator of the server master set and is a distributed system.

6. A directory service system for content according to any one of claims 1 to 5,
**characterized in that** the system is further provided with a commerce server for performing charging management in cooperation with the content server master set and performs charging processing as the user performs use such as output of the extracted and selected content.

7. A directory service system for content according to claim 6,
**characterized in that**, in performing charging processing by performing output of the extracted and selected content, the content is decoded in the user terminal.

8. A directory service system for content according to claim 6 or 7,
**characterized in that** the content is content which is encoded according to its own format decodable by using a decode key.

9. A directory service system for content according to claim 7 or 8,
**characterized in that** the content is decoded and charged designating one or plural conditions for use among conditions such as a method of outputting and using the content, and a size, a resolution, and the number of outputs of content to be outputted.

10. A directory service system for content according to any one of claims 1 to 9,
**characterized in that** sample data of the content, data of a content main body, charging information concerning a price for use of the content, attribute information concerning control of use of the content, and a unique ID for identifying the content are included in the content.

11. A directory service system for content according to any one of claims 1 to 9,
**characterized in that** sample data of the content, information on a URL where the content main body exists, charging information concerning a price for use of the content, attribute information concerning control for use of content, and a unique ID for identifying the content are included in the content.

12. A directory service system for content according to any one of claims 1 to 9,
**characterized in that** sample data of the content, a content location ID for identifying a location on a network of the content main body, charging information concerning a price for use of the content, attribute information concerning control for use of content, and a unique ID for identifying the content are included in the content.

13. A directory service system for content according to any one of claims 1 to 12,
**characterized in that** the processing for performing charging processing by performing output of extracted and selected content is to perform processing for selecting content through processing for, for example, browsing the sample data of the content stored in the content server.

14. A directory service system for content according to any one of claims 1 to 13,
**characterized in that**, in the processing for performing authentication of a user when charging processing is performed as a user outputs and uses extracted and selected content, the authentication is performed using a hardware key provided in a user terminal.

15. A directory service system for content according to claim 14,
**characterized in that** the system is further provided with a content output shop terminal, which is provided by the system administrator side, being connected to a computer network, and is capable of outputting and using content as a user provides an authentication key in the content output shop terminal.

16. A directory service system for content according to any one claims 1 to 15,
**characterized in that** the directory service system is a system for registering content consisting of computer readable data using a computer system provided with input means, storage means, control means, display means, and output means, and it is possible to register content according to processing including:
a step of designating attribute information to be used as a key when the content is retrieved and extracted or selected;
a step of packaging data of the content based upon the designated information;
a step of designating a storage place of the content; and
a step of storing the packaged data in an information storage medium.

17. A directory service system for content according to claim 16,
**characterized in that** information on whether or not content may be disclosed is included in attribute information of content to be registered.

18. A directory service system for content according to claim 16 or 17,
**characterized in that** the content to be registered is content which a user registers from a user terminal connected to a network, and the directory service system includes processing for setting a hardware key for authentication with respect to the user in the user terminal when the user registers the contents.

19. A directory service system for content according to any one of claims 1 to 18,
**characterized in that** the content is a file such as an HTML file, an XML file, or a CHTML file to be displayed on a computer network, in which sample data for the content, information on a URL where a content main body is located or a content location ID for identifying a location of the content on a network, charging information concerning price information of the content, attribute information concerning control for use of the content, and a unique ID for identifying the content are included.
